# NEUE EUROPÄISCHE PATENTSCHRIFT

(11) **EP 1 464 215 B2**
(45) Veröffentlichungstag und Bekanntmachung des Hinweises auf die Entscheidung über den Einspruch: **29.02.2012**
(45) Hinweis auf die Patenterteilung: 02.11.2006
(21) Anmeldenummer: 03027603.4
(22) Anmeldetag: 02.12.2003
(51) Int. Cl.: A01D 43/08

(54) **Maschine zum Mähen von stängelartigem Erntegut**
Machine for mowing of stalk-like crop
Machine pour faucher des plantes à tige

(30) Priorität: 02.04.2003 DE 10314859
(43) Veröffentlichungstag der Anmeldung: 06.10.2004
(73) Patentinhaber: Maschinenfabrik Kemper GmbH & Co. KG, 48973 Stadtlohn (DE)
(72) Erfinder: Brüning, Ulrich, 48653 Coesfeld (DE); Kemper, Frank, 48703 Stadtlohn (DE)
(74) Vertreter: Holst, Sönke

(56) Entgegenhaltungen:
- EP-A1- 0 504 639
- EP-A1- 1 177 718
- EP-A1- 1 234 493
- DE-A1- 4 111 981
- Prospekt "Die Erntevorsatz-Generation - 300er Serie - "

## Beschreibung

Die Erfindung betrifft eine Maschine zum Mähen von stängelartigem Erntegut, mit nebeneinander vor einem Einzugskanal angeordneten Einzugs- und Mäheinrichtungen zum Abschneiden und Fördern des Ernteguts, Querfördermitteln zur Querförderung des abgeschnittenen Ernteguts zumindest näherungsweise quer zur Vorwärtsfahrtrichtung zur Mitte der Maschine, Umlenkfördermitteln, die das von den Querfördermitteln einlaufende Erntegut einem Einzugskanal zuführen, durch den das Erntegut einer Häckseleinrichtung aufgebbar ist, und mit um eine etwa vertikale Achse drehbar antreibbaren Fördereinrichtungen an der Oberseite der den Umlenkfördermitteln benachbarten Einzugs- und Mäheinrichtungen, die eine Förderscheibe umfassen und antriebsmäßig permanent mit den Einzugs- und Mäheinrichtungen gekoppelt sind.

Es kommt gelegentlich vor, dass bei der Ernte von stängelartigem Erntegut - beispielsweise von Silomais - am Rand eines Feldes nur eine oder zwei Pflanzenreihen stehen bleiben. Diese Pflanzenreihen können nur mit den äußeren Mäh- und Einzugseinrichtungen der Maschine geschnitten und eingezogen werden. Bei einer sehr breiten Maschine (z. B. einer 8 oder 10 Pflanzenreihen erfassenden Ausführungsform) müssen die Pflanzen über einen längeren Weg durch die Querfördermittel zur Mitte der Maschine transportiert werden. Da an den mittleren Mäh- und Einzugseinrichtungen keine weiteren Pflanzen einlaufen, werden die geschnittenen Pflanzen nicht durch in die Querfördermittel einlaufendes Material in den Querfördermitteln gehalten, sondern stehen relativ lose darin. Durch einen hohen Schwerpunkt bedingt, können sich die Pflanzen beim Transport immer weiter nach unten neigen und rutschen dann mit ihren unteren Enden aus den Querfördermitteln heraus.

Seitlich vor dem Einzugskanal sind bei einer Ausführungsform gemäß EP 1 177 718 A als Umlenkfördermittel dienende Schrägfördertrommeln mit etwa vertikalen Drehachsen angeordnet, deren Aufgabe darin besteht, die Pflanzen in den Einzugskanal zu fördern. Die Schrägfördertrommeln sind aber nicht in der Lage, die mit den unteren Enden aus dem Querförderkanal herausragenden Pflanzen zu erfassen. Die Pflanzen legen sich quer vor die Querfördertrommeln und blockieren dann den weiteren Gutfluss. Durch eine Verengung des Querförderkanals könnte man den Klemmeffekt zwar verbessern, man wird aber im normalen Betrieb, d. h. wenn über die gesamte Breite der Maschine Pflanzen einlaufen, Durchsatzprobleme bekommen.

Die EP 1 177 718 A schlägt zur Lösung dieses Problems vor, über dem und in Vorwärtsfahrtrichtung vor dem Querförderkanal eine drehbar angetriebene Fördereinrichtung anzuordnen, die aus dem Querförderkanal herausgetretene Pflanzen wieder in letzteren hineinfördert. Die Fördereinrichtung wird um eine vorzugsweise horizontale, quer zur Fahrtrichtung verlaufende Achse in Drehung versetzt. Ihre Geschwindigkeit muss somit hinreichen, die Pflanze wieder in den Querförderkanal hineinzubringen. Da die Pflanzen auf der Fördereinrichtung zu liegen kommen, beruht die Förderwirkung der Fördereinrichtung nur auf der Schwerkraft, was in manchen Fällen nicht hinreichend sein kann, da die Fördereinrichtung an der Pflanze abgleitet.

Die EP 0 504 639 A beschreibt eine Maschine zur Maisernte, bei der die Einzugs- und Mäheinrichtungen aus einem scheibenförmigen Messerträger mit daran befestigten Messern und Fördertrommeln bestehen. Die Fördertrommeln können aus einem kegelstumpfförmigen Grundkörper, mit dem waagerechte Mitnehmerflächen fest verbunden sind und einer darüber liegenden zylinderförmigen Förderwalze bestehen. Zwei benachbarte Fördertrommeln bewegen die abgeschnittenen Maisstängel in Richtung auf eine Querförderschnecke zu.

Ein anderes Problem bei bekannten Maschinen zur Ernte von stängelartigem Erntegut besteht darin, dass bei der Umlenkung des Ernteguts von der Querförderung nach hinten in den Einzugskanal, die durch aktive oder passive Umlenkfördermittel bewerkstelligt wird, relativ starke Trägheitskräfte auf die Pflanzen wirken. Diese Trägheitskräfte können bei sehr reifem Erntegut dazu führen, dass sich Fruchtstände von den Pflanzen lösen, auf den Erdboden fallen und so dem Ernteprozess verloren gehen.

Zur Lösung dieses Problems wird in der EP 1 234 493 A vorgeschlagen, oberhalb der mittleren Einzugs- und Mäheinrichtungen der Maschine mit Mitnehmern angeordnete Förderscheiben anzubringen. Im Zusammenwirken mit Abstreifern fördern die Förderscheiben die abgefallenen Pflanzenteile in den Erntegutstrom zurück.

Das der Erfindung zu Grunde liegende Problem wird darin gesehen, die Gutförderung in einer Maschinen zum Mähen von stängelartigem Erntegut zu verbessern, insbesondere wenn nur ein Teil der Mäh- und Einzugstrommeln mit Pflanzenmaterial beaufschlagt wird oder relativ reifes Erntegut geerntet wird.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine Maschine zum Mähen von stängelartigem Erntegut umfasst nebeneinander vor einem Einzugskanal angeordnete Einzugs- und Mäheinrichtungen. Die Fördereinrichtungen sind oberhalb der Einzugs- und Mäheinrichtungen angeordnet, die den Umlenkfördermitteln benachbart sind. Sie befinden sich somit auf beiden Seiten in Fahrtrichtung vor dem zur Häckseleinrichtung führenden Einzugskanal und sind antriebsmäßig permanent mit den Einzugs- und Mäheinrichtungen gekoppelt. Die Fördereinrichtungen sind jeweils mit einer vertikalen oder zumindest näherungsweise vertikalen Drehachse versehen. Die Drehrichtung wird derart gewählt, dass aus den Querfördermitteln ausgetretene Pflanzen bzw. -teile wieder in den Erntegutstrom eingebracht werden. Die Fördereinrichtung setzt sich aus einer flachen, vorzugsweise mit nach oben überstehenden Mitnehmern ausgestattete Förderscheibe und einer koaxial über der Förderscheibe angeordneten, glatten oder mit Mitnehmern ausgestatteten Fördertrommel zusammen.

Die erfindungsgemäße Wahl der Form der Fördereinrichtung ermöglicht eine kraftvolle und aktive Förderung der Pflanzen, da die Förderwirkung nicht durch die Gewichtskraft der Pflanzen begrenzt ist.

Die Mitnehmer können starr an der Förderscheibe oder Fördertrommel angebracht sein, obwohl auch gesteuerte Mitnehmer denkbar sind. Die Mitnehmer können somit in Abhängigkeit von ihrer jeweiligen Winkelposition mehr oder weniger weit nach außen von der Förderscheibe bzw. Fördertrommel überstehen, wie Finger an Schneckenförderern von Schneidwerken, und/oder verschwenkt werden, wie die Zinken einer Haspel eines Schneidwerks. Bei einer bevorzugten Ausführungsform sind die Mitnehmer starr und entgegen der Drehrichtung nachlaufend gekrümmt, um ihnen ein abweisendes Förderverhalten zu verleihen.

Die Einzugs- und Mäheinrichtungen können aus übereinander angeordneten Scheiben mit um ihren Umfang verteilten Aussparungen zur Aufnahme von Pflanzenstängeln und darunter angeordneten Mähscheiben aufgebaut sein. Dann befinden sich die Fördereinrichtungen zumindest auf den Einzugs- und Mäheinrichtungen, die dem Einzugskanal vorgelagert sind. Die Einzugs- und Mäheinrichtungen können jedoch auch eine mit Haltemitteln für das abgemähte Erntegut versehene Gliederkette umfassen, die eine Arbeitstrumseite aufweist, welche im Einsatz quer zur Fahrtrichtung der Maschine bewegbar ist. Dann befinden sich die Fördereinrichtungen an den inneren Endbereichen der Gliederketten. Denkbar wäre es auch, eine oder mehrere Fördereinrichtungen weiter außen den Querfördermitteln zuzuordnen.

Insbesondere bietet sich an, die Fördereinrichtung auf einer Platte anzuordnen, die über einer oder mehreren, vor dem Einzugskanal angeordneten Einzugs- und Mäheinrichtungen angebracht ist. Diese Platten werden auch als Mitteltisch bezeichnet.

Es ist ein mit den Einzugs- und Mäheinrichtungen permanent gekoppelter Antrieb der Fördereinrichtungen vorgesehen. Wird der Antrieb der Maschine im Falle eines Erntegutstaus reversiert, wird automatisch auch die Fördereinrichtung reversiert, so dass sie das Entfernen gestauten Materials aus dem Einzugskanal unterstützen kann. Die Fördereinrichtung ist von besonderem Vorteil, da sie das aus dem Einzugskanal beim Reversieren herausgeförderte Erntegut im Anschluss an das Reversieren auch wieder in den Einzugskanal hineinfördert. Im Stand der Technik hat man ohne das zusätzliche Förderelement große Schwierigkeiten, das oberhalb einer auch als Mitteltisch bezeichneten Platte, die über den mittleren zwei Einzugs- und Mäheinrichtungen angeordnet ist, beim Reversieren abgelegte Erntegutpaket wieder einzuziehen. Da das erfindungsgemäße Förderelement genau dort positioniert ist, wo das Erntegutpaket abgelegt wurde, kommt seine Förderwirkung sehr gut zur Wirkung, ohne dass sich unnötige Reibungsverluste ergeben.

Die Fördereinrichtung wird rotativ angetrieben. Dazu kann sie über eine Welle und optional durch ein Getriebe mit einer ihr benachbarten Einzugs- und Mäheinrichtung verbunden sein, die durch einen Antrieb ebenfalls in Drehung versetzbar ist.

In den Zeichnungen ist ein nachfolgend näher beschriebenes Ausführungsbeispiel der Erfindung dargestellt. Es zeigt:
- Fig. 1: eine perspektivische Ansicht einer Maschine zum Mähen von stängelartigem Erntegut in schematischer Darstellung,
- Fig. 2: eine Seitenansicht einer Fördereinrichtung der Maschine aus Figur 1, und
- Fig. 3: eine Draufsicht auf die Fördereinrichtung aus Figur 2.

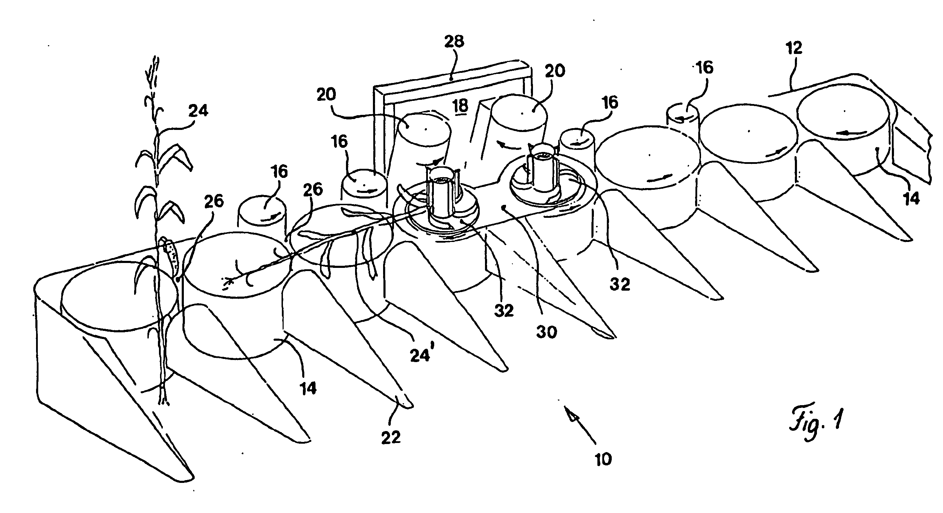

In der Figur 1 ist eine erfindungsgemäße Maschine 10 zum Mähen von stängelartigem Erntegut wiedergegeben. An einem schematisch dargestellten Rahmen 12 sind seitlich nebeneinander acht Einzugs- und Mäheinrichtungen 14 angebracht, die in an sich bekannter Weise aus koaxial über zugehörigen Mähscheiben angeordneten Förderscheiben mit einer Vielzahl von über den Umfang verteilten taschenförmigen Aussparungen bestehen. Die Förderscheiben erfassen und transportieren das stängelartige Erntegut, das mittels der Mähscheiben vom Boden des Feldes abgeschnitten wird. Die Anzahl der Einzugs- und Fördereinrichtungen 14 der Maschine 10 ist beliebig, es können also mehr oder weniger als die in Figur 1 dargestellten acht Einzugs- und Fördereinrichtungen 14 Verwendung finden.

An der Rückseite der Einzugs- und Mäheinrichtungen 14 wird das Erntegut durch (in den Zeichnungen aus Gründen der Übersichtlichkeit nicht dargestellte) Ausräumer, die als rotierende Scheiben oder feststehende Elemente ausgeführt sein können, aus den Förderscheiben entnommen, und durch mit den Einzugs- und Mäheinrichtungen 14 zusammenwirkende Querfördertrommeln 16, die mit abstehenden Mitnehmerzähnen versehen sind, die entsprechende Schlitze in der Rückwand der Maschine 10 durchdringen, in seitlicher Richtung zur Mitte der Maschine 10 gefördert. Die Rückseiten der Einzugs- und Mäheinrichtungen 14 bilden im Zusammenwirken mit den Querfördertrommeln 16 Querfördermittel zur Förderung des Ernteguts quer zur Vorwärtsrichtung der Maschine 10 zu ihrer Mitte hin.

An der Rückseite der Mitte der Maschine 10 ist der Einzugskanal 18 eines Feldhäckslers angeordnet. Das Erntegut wird in der Mitte der Maschine 10 durch beidseits in Vorwärtsfahrtrichtung vor dem Einzugskanal 18 angeordnete Schrägfördertrommeln 20, die ebenfalls mit Mitnehmerzähnen versehen sind, in den Einzugskanal 18 gefördert. Die Drehachsen der Schrägfördertrommeln 20 sind nach vorn geneigt.

Die Einzugs- und Mäheinrichtungen 14 werden um etwa vertikale, bzw. leicht nach vorn geneigte Drehachsen angetrieben. Auch die Querfördertrommeln 16 und die Schrägfördertrommeln 20 werden in Drehung versetzt. Der entsprechende Antrieb erfolgt durch eine selbstfahrende Erntemaschine, in der Regel einen Feldhäcksler, deren Einzugskanal 18 rückseitig an der Mitte der Maschine angeordnet ist und die Maschine in Vorwärtsfahrtrichtung über ein Feld bewegt. Die Maschine 10 ist durch einen Trägerrahmen 28 lösbar an der selbstfahrenden Erntemaschine befestigt. Die Drehrichtungen der Einzugs- und Mäheinrichtungen 14 sind beidseits der Längsmittelebene der Maschine 10 gegensinnig, wobei sich die jeweils inneren drei Einzugs- und Mäheinrichtungen 14 gegensinnig zu den jeweils ganz außen angeordneten Einzugs- und Mäheinrichtungen 14 drehen.

Wird die Maschine 10 über ein Feld bewegt, werden die dort stehenden Pflanzen 24 ggf. durch Stängelteiler 22 seitlich zur Seite gedrückt, von den reihenunabhängig wirkenden Einzugs- und Mäheinrichtungen 14 erfasst und vom Boden abgetrennt. Die Pflanzen 24 werden dann quer zur Vorwärtsfahrtrichtung im Querförderkanal 26, der zwischen der Rückwand der Maschine 10 und den Querfördertrommeln 16 einerseits und den Einzugs- und Mäheinrichtungen 14 andererseits definiert ist, durch die Querfördermittel zur Mitte der Maschine 10 transportiert. Dort werden sie durch die als Umlenkfördermittel dienenden Schrägfördertrommeln 20 in den Einzugskanal 18 gefördert.

Anzumerken ist, dass die Ausgestaltung des Querförderkanals 26 im Rahmen des erfindungsgemäßen Gedankens beliebig ist. Es kann sich wie in der Figur 1 um einen zwischen der Rückwand der Maschine 10 und den davor angeordneten Einzugs- und Mäheinrichtungen 14 gebildeten Kanal handeln, durch den das Gut durch die Einzugs- und Mäheinrichtung 14 im Zusammenwirken mit dahinter angeordneten Querfördertrommeln 16 oder mit angetriebenen Ausräumerscheiben oder Querfördergurten transportiert wird (DE 195 27 607 A, DE 195 31 918 A und DE 198 56 444 A). Auch ein von den Einzugs- und Mäheinrichtungen 14 unabhängiger Transport des Ernteguts im Querförderkanal 26 ist denkbar, der durch separate Förderer beispielsweise in Form von Fördergurten oder Förderschnecken (GB 2 012 154 A) bewerkstelligt werden kann.

Insbesondere, falls nur eine äußere Einzugs- und Mäheinrichtung 14 mit Erntegut beaufschlagt wird, ist es denkbar, dass einzelne Pflanzen wegen fehlender Gutzufuhr von den anderen Einzugs- und Mäheinrichtungen 14 nicht sicher im Querförderkanal 26 festgehalten werden können. Diese Pflanzen 24 können, wie die in Figur 1 mit dem Bezugszeichen 24' gekennzeichnete Pflanze, wegen ihres relativ hohen Schwerpunkts umfallen und mit ihrem unteren Ende aus dem Querförderkanal 26 heraus gelangen. In einem derartigen Fall ist es möglich, dass die Pflanze 24' auf dem zwischen den zwei mittleren Einzugsund Mäheinrichtungen 14 angeordneten, plattenförmigen Mitteltisch 30 zu liegen kommt.

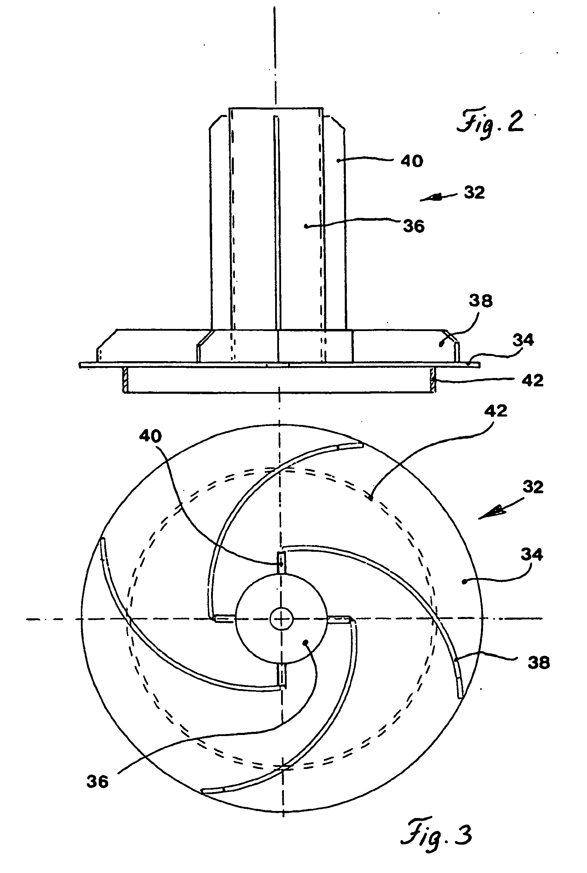

Um die Pflanze 24' trotzdem in den Einzugskanal 18 fördern zu können, sind oberhalb des Mitteltischs 30 an der Oberseite der zwei mittleren Einzugs- und Mäheinrichtungen 14 zwei Fördereinrichtungen 32 angeordnet. Die Drehachse der Fördereinrichtungen 32 erstrecken sich näherungsweise vertikal und sind, wie die der Einzugs- und Mäheinrichtungen 14, leicht nach vorn geneigt. Die Fördereinrichtungen 32 setzen sich - wie anhand der Figuren 2 und 3 genauer erkennbar ist - aus einer unteren kreisförmigen Förderscheibe 34 und einer darüber und koaxial zur Förderscheibe 34 angeordneten zylindrischen Fördertrommel 36 zusammen. Die Förderscheibe 34 ist mit nach oben überstehenden, gekrümmten Mitnehmern 38 versehen. Die Krümmung der Mitnehmer 38 verläuft entgegen der Drehrichtung, so dass sich ein abweisendes Förderverhalten ergibt. Die Oberseite der Mitnehmer 38 könnte zur Verstärkung der Aggressivität noch mit dreieck- oder sägezahnförmigen Erhebungen ausgestattet sein. Die Fördertrommel 36 ist ebenfalls mit Mitnehmern 40 versehen, die jedoch radial orientiert sind. An der Unterseite der Förderscheibe 34 ist ein sich nach unten erstreckender zylindrischer Kragen 42 als Wickelschutz angebracht.

Die Fördereinrichtungen 32 sind koaxial zu den jeweils darunter angeordneten Einzugs- und Mäheinrichtungen angeordnet. Sie sind jeweils durch eine Welle und optional durch ein Getriebe antriebsmäßig mit der unter ihnen angeordneten Einzugs- und Mäheinrichtung 14 verbunden.

Die Fördereinrichtungen 32 fördern Pflanzen 24', die aus dem Querförderkanal 26 herausgelangt sind, oder von den Pflanzen bei der Umlenkung in den Einzugskanal 18 abfallende Fruchtstände, selbsttätig wieder in den Querförderkanal 26 hinein, da ihre den ausgetretenen Pflanzen 24' zugewandten Oberflächen sich im normalen Erntebetrieb in Richtung auf den Einzugskanal 18 zu drehen, wie in Figur 1 durch die Pfeile angedeutet. Danach werden die Pflanzen durch die Schrägfördertrommeln 20 in den Einzugskanal 18 gefördert. Die gewählte Drehrichtung und Positionierung der Fördereinrichtungen 32 haben den Vorteil, dass die Pflanzen aggressiv und wirkungsvoll gefördert werden.

Durch die antriebsmäßige Kopplung der Fördereinrichtungen 32 mit den Einzugs- und Mäheinrichtungen 14 werden die Fördereinrichtungen 32 im Reversierbetrieb der Maschine 10 in umgekehrter Drehrichtung angetrieben. Sie unterstützen das Ablegen beim Reversieren aus dem Einzugskanal 18 ausgeworfenen Ernteguts an den beiden Außenseiten des Mitteltischs 30. Wird nach dem Reversieren der normale Erntebetrieb wieder aufgenommen, fördern sie das dort abgelegte Erntegut wieder in den Querförderkanal 26 hinein, von dem aus es in den Einzugskanal 18 gelangt. Soll das Erntegut beim Reversieren auf der Mitte des Mitteltischs 30 abgelegt werden, kann die beim Erntebetrieb gewählte Drehrichtung der Fördereinrichtungen 32 beim Reversieren auch beibehalten und vor der Wiederaufnahme des Erntebetriebs kurzfristig umgekehrt werden, um die Pflanzen vom Mitteltisch 30 zu entfernen.

## Patentansprüche

1. Maschine (10) zum Mähen von stängelartigem Erntegut, mit nebeneinander vor einem Einzugskanal (18) angeordneten Einzugs- und Mäheinrichtungen (14) zum Abschneiden und Fördern des Ernteguts, Querfördermitteln zur Querförderung des abgeschnittenen Ernteguts zumindest näherungsweise quer zur Vorwärtsfahrtrichtung zur Mitte der Maschine (10), Umlenkfördermitteln, die das von den Querfördermitteln einlaufende Erntegut dem Einzugskanal (18) zuführen, durch den das Erntegut einer Häckseleinrichtung aufgebbar ist, und mit um eine etwa vertikale Achse drehbar antreibbaren Fördereinrichtungen (32) an der Oberseite der den Umlenkfördermitteln benachbarten Einzugs- und Mäheinrichtungen (14), die eine Förderscheibe (34) umfassen und antriebsmäßig permanent mit den Einzugs- und Mäheinrichtungen (14) gekoppelt sind, **dadurch gekennzeichnet, dass** die Fördereinrichtungen (32) eine über der Förderscheibe (34) angeordnete, zur Förderscheibe (34) koaxiale Fördertrommel (36) aufweisen.

2. Maschine nach Anspruch 1, **dadurch gekennzeichnet, dass** die Förderscheibe (34) und/oder die Fördertrommel (36) mit Mitnehmern (38, 40) versehen ist.

3. Maschine (10) nach Anspruch 2, **dadurch gekennzeichnet, dass** die Mitnehmer (38, 40) sich radial erstrecken oder gekrümmt sind, insbesondere der Drehrichtung nachlaufend.

4. Maschine (10) nach einem der Ansprüche 1 bis 3, **dadurch gekennzeichnet, dass** die Querfördermittel das Erntegut in einem an der Rückseite der Einzugs- und Mäheinrichtungen (14) angeordneten Querförderkanal (26) transportieren.

## Claims

1. A machine (10) for mowing stalked crops, with infeed and mowing devices (14) for cutting off and conveying the crop arranged side-by-side in front of an intake channel (18), transverse feeding means for transversely feeding the cut crop at least approximately transverse to the direction of forward travel to the middle of the machine (10), deflecting conveyor means (20) which feed the crop flowing in from the transverse conveyor means to the intake channel (18), through which the crop can be delivered to a chopper device, and with conveyor devices (32) which can be driven to rotate about an approximately vertical axis on the upper side of the diverting conveyor means (20) adjacent the infeed and mowing devices (14), which conveyor devices comprise a conveyor disc (34) and are permanently connected to be driven with the associated infeed and mowing device (14), **characterized in that** the conveyor devices (32) comprise a conveyor drum (36) arranged above the conveyor disc (34), coaxial with the conveyor disc (34).

2. A machine according to claim 1, **characterized in that** the conveyor disc (34) and/or the conveyor drum (36) is provided with entraining members (38, 40).

3. A machine (10) according to claim 2, **characterized in that** the entraining means (38, 40) extend radially or are curved, especially trailing in the direction of rotation.

4. A machine (10) according to any of claims 1 to 3, **characterized in that** the transverse conveyor means transport the crop in a transverse feed channel (26) on the rear side of the infeed and mowing devices (14).

## Revendications

1. Machine (10) destinée à faucher des végétaux à tiges, comportant des dispositifs d'introduction et de coupe (14) destinés à couper et à transporter les végétaux et arrangé l'un à côte de l'autre avant un conduit d'alimentation (18), des convoyeurs transversaux destinés à transporter transversalement les végétaux coupés vers le milieu de la machine (10), au moins à peu près perpendiculairement au sens de déplacement vers l'avant, des convoyeurs de déviation (20), par lesquels les végétaux venant des convoyeurs transversaux sont transportés dans le conduit d'alimentation (18), par lequel les végétaux sont amenés dans un dispositif de hachage, et des dispositifs de transport (32), qui peuvent être entraînés en rotation autour d'un axe sensiblement vertical et qui sont disposés sur le côté supérieur des dispositifs d'introduction et de coupe (14) qui sont adjacents aux convoyeurs transversaux (20) et qui comportent un disque de transport (34) et sont relié permanent en entraînement avec le dispositif d'introduction et de coupe (14) correspondant, **caractérisée en ce que** les dispositifs de transport (32) comportent un tambour de transport (36), agencé au-dessus du disque de transport (34) coaxialement au disque de transport (34).

2. Machine (10) selon la revendication 1, **caractérisée en ce que** le disque de transport (34) et/ou le tambour de transport (36) sont munis d'éléments entraîneurs (38, 40).

3. Machine (10) selon la revendication 2, **caractérisée en ce que** les éléments entraîneurs (38, 40) sont orientés radialement ou sont courbes, en particulier sont courbés vers l'arrière dans le sens de rotation.

4. Machine (10) selon l'une quelconque des revendications 1 à 3, **caractérisée en ce que** les convoyeurs transversaux transportent les végétaux dans un conduit de transport transversal (26), agencé sur le côté arrière des dispositifs d'introduction et de coupe (14).
